# FASCICULE DE BREVET EUROPEEN

(11) **EP 2 701 944 B1**
(45) Date de publication et mention de la délivrance du brevet: **29.07.2015**
(21) Numéro de dépôt: 12717732.7
(22) Date de dépôt: 27.04.2012
(51) Int. Cl.: B60N 2/28

(54) **SIEGE AUTO PIVOTANT POUR ENFANT, DESTINE A EQUIPER UN SIEGE DE VEHICULE**
SELBSTDREHENDER KINDERSITZ ZUR MONTAGE AUF EINEM FAHRZEUGSITZ
SELF-PIVOTING CHILD CAR SEAT TO BE FITTED TO A VEHICLE SEAT

(30) Priorité: 29.04.2011 FR 1153668; 10.11.2011 FR 1160293
(43) Date de publication de la demande: 05.03.2014
(73) Titulaire: Dorel France SA, 49309 Cholet Cedex (FR)
(72) Inventeur: RABEONY, Haja, F-49300 Cholet (FR)
(74) Mandataire: Vidon Brevets & Stratégie
(86) Numéro de dépôt international: PCT/EP2012/057862
(87) Numéro de publication internationale: WO 2012/146761

(56) Documents cités:
- EP-A1- 2 295 287
- DE-A1- 19 744 978

## Description

### 1. Domaine de l'invention

Le domaine de l'invention est celui des dispositifs de retenue. Plus précisément, l'invention concerne les sièges pour enfants, encore appelés « sièges auto », destinés à être installés sur les sièges passagers de véhicules, notamment automobiles. Elle concerne plus particulièrement les sièges pour enfant comprenant une embase et un fauteuil pouvant pivoter par rapport à cette embase, autour d'un axe sensiblement vertical.

### 2. Art antérieur

Plusieurs types de sièges auto pivotants pour enfant sont connus, notamment des documents EP 1 625 967, EP 1 625 968 et EP 1 894 770. Ces sièges auto comprennent une embase, qui est destinée à être placée de façon fixe sur l'assise du siège du véhicule, et un fauteuil qui est destiné à recevoir l'enfant et qui peut pivoter par rapport à l'embase autour d'un axe sensiblement vertical. Un tel pivotement permet au fauteuil de prendre une position d'installation de l'enfant et une position de transport, distincte de la position d'installation.

Pour garantir la sécurité de l'enfant en cas d'accident du véhicule, il est nécessaire que le fauteuil soit fixé en position de transport quand le véhicule est en mouvement. Il convient également d'éviter que, pendant le déplacement du véhicule, le fauteuil soit déplacé dans une position inappropriée, par exemple tourné vers les autres passagers de la banquette arrière du véhicule. Pour cela il faut empêcher que le fauteuil puisse être pivoté par l'enfant installé dans le siège ou par d'autres passagers du véhicule, par exemple par un autre enfant assis à côté du siège auto.

Par ailleurs, il existe des sièges auto pouvant prendre deux positions distinctes de transport, la première étant une position de « face à la route » et la seconde étant une position « dos à la route ». Un siège auto permettant ces deux positions de transport est par exemple divulgué par le document EP 2 080 664. Dans ce cas, chacune des deux positions de transport est adaptée à l'âge ou au poids de l'enfant (typiquement « dos route » pour les enfants de poids inférieur à un seuil prédéterminé, « face route » au delà de ce seuil). Dans les sièges proposant des positions d'installation, le fauteuil se trouve, dans une telle position d'installation, sensiblement à 90° des deux positions de transport. Il y a donc un risque important que l'adulte installant l'enfant soit tenté, par inadvertance ou habitude, de le placer dans une position de transport inappropriée pour son âge.

Par exemple, ayant l'habitude depuis plusieurs mois de placer l'enfant dos à la route depuis plusieurs mois, l'adulte peut instinctivement ramener le fauteuil dans cette position, alors que le poids de l'enfant justifie maintenant une installation « face à la route ». Inversement, par exemple parce qu'il considère que la position « face à la route » est plus naturelle, l'adulte peut par inadvertance placer l'enfant dans cette position, alors que le poids de ce dernier justifierait une installation « dos à la route ».

Enfin dans certains cas, le haut du dossier du fauteuil est relié à l'embase ou au dossier du siège du véhicule par une sangle appelée « top tether ». Le pivotement d'un siège auto ne doit pas permettre que cette sangle s'enroule autour du fauteuil, et en particulier qu'elle s'enroule autour de la tête de l'enfant, à la suite d'une mauvaise utilisation.

Un siège auto dont le fauteuil est pivotant peut donc créer de nombreuses occasions de mauvaises utilisations par l'adulte installant l'enfant, par l'enfant lui-même ou par un tiers, ce qui génère des risques inacceptables pour la sécurité de l'enfant. Du document, DE 197 44 978 A1, on connaît un siège auto pour un enfant,

qui montre les caractéristique du préambule de la revendication 1.

### 3. Objectifs de l'invention

La présente invention a pour objectif de pallier au moins certains de ces inconvénients de l'art antérieur.

En particulier, la présente invention a pour objectif, selon au moins un mode de réalisation, de fournir un siège auto pour enfant dont le fauteuil est pivotant, pouvant prendre deux positions de transport de l'enfant (« dos route » et « face route ») et au moins une position d'installation (face à une portière du véhicule), dans lequel le risque de mauvaise utilisation affectant la sécurité de l'enfant est réduit.

En particulier, un objectif de l'invention est, selon au moins un mode de réalisation, de fournir un tel siège qui puisse prendre plusieurs positions de transport, et notamment une position de transport face à la route et une position de transport dos à la route, dans des conditions satisfaisantes de sécurité.

Un autre objectif de l'invention est, selon au moins un mode de réalisation, de fournir un tel siège dans lequel le risque d'un pivotement du fauteuil vers une position inappropriée pendant le déplacement du véhicule est réduit.

De façon générale, la présente invention a pour objectif de réduire le risque de mauvaise utilisation du siège pouvant affecter la sécurité de l'enfant qui y est installé, et d'installation de l'enfant dans une position appropriée, notamment en raison de son âge.

### 4. Exposé de l'invention

Ces objectifs, ainsi que d'autres qui apparaîtront plus clairement par la suite sont atteints à l'aide d'un siège auto pour enfant, comprenant une embase destinée à être placée sur l'assise d'un siège d'un véhicule et un fauteuil monté pivotant sur ladite embase, autour d'un axe sensiblement vertical, de façon à pouvoir prendre :
- au moins deux positions de transport, l'une dans laquelle le fauteuil est orienté vers l'avant du véhicule et l'autre dans laquelle le fauteuil est orienté vers l'arrière du véhicule,
- au moins une position d'installation à droite, et/ou une position d'installation à gauche, dans lesquelles le fauteuil est orienté, respectivement, vers la droite et vers la gauche du véhicule,
le siège auto comprenant des moyens de sélection de l'une desdites position de transport, de façon que, depuis l'une desdites positions d'installation, ledit fauteuil ne puisse être déplacé que vers la position de transport sélectionnée.

Préférentiellement, le siège auto comprend, pour chaque position d'installation, des moyens de limitation du pivotement du fauteuil sur une première plage angulaire incluant la position de transport dans laquelle le fauteuil est orienté vers l'avant du véhicule et au moins une desdites positions d'installation, ou sur une seconde plage angulaire incluant la position de transport dans laquelle le fauteuil est orienté vers l'arrière du véhicule et au moins une desdites positions d'installation.

Ainsi, quand le fauteuil est dans une position de transport, face à la route ou dos à la route, l'utilisateur peut faire pivoter le siège vers une position d'utilisation. En revanche, il ne peut pas poursuivre le pivotement vers l'autre position de transport, qui pourrait être inadaptée pour l'enfant, sans avoir agis sur un moyen de limitation du pivotement spécifique. Ces moyens de limitation permettent donc d'éviter le passage d'une configuration face à l'autre dans des conditions inappropriées.

Avantageusement, le siège auto pour enfant comprend au moins un sélecteur permettant à l'utilisateur de choisir la zone angulaire à laquelle le pivotement du fauteuil est limité, ledit sélecteur étant lié audits moyens de limitation du pivotement du fauteuil par l'intermédiaire de moyens de rappel, de telle sorte que ledit sélecteur puisse être placé dans une position de sélection correspondant à une zone angulaire quand ledit fauteuil n'est pas dans ladite zone angulaire, les moyens de limitation du pivotement du fauteuil limitant la position du fauteuil à cette zone angulaire à partir du moment où ledit fauteuil pénètre dans ladite zone angulaire.

Ainsi, l'utilisateur peut agir sur le sélecteur pour changer la zone angulaire dans laquelle le fauteuil est autorisé à pivoter, avant même que le fauteuil soit dans la zone angulaire qui lui sera autorisée. Dès que le fauteuil est placé dans cette zone angulaire, la limitation devient effective.

Selon un mode de réalisation avantageux, lesdits moyens de limitation du pivotement comprennent une plaque sensiblement horizontale dans laquelle est tracée une piste et un pion engagé dans ladite piste, la plaque étant entraînée en rotation par rapport au pion, autour de l'axe de rotation du fauteuil, par le pivotement de ce fauteuil par rapport à l'embase, ledit pion étant mobile entre au moins deux positions correspondant respectivement aux positions de transport orientées vers l'avant ou vers l'arrière, et la piste étant formée de façon à ce que le pion puisse coulisser exclusivement dans une première portion de la piste, quand il est dans une première position, et exclusivement dans une seconde portion de la piste quand il est dans une seconde position.

Ce mode de réalisation permet de réaliser simplement et efficacement une limitation de la rotation à une plage angulaire donnée, en fonction de la position du pion qui peut être modifiée par une commande adaptée.

Préférentiellement, ladite plaque est liée audit fauteuil, et ledit pion est porté par l'embase.

Selon un mode de réalisation avantageux, ladite piste est une rainure comprenant une pluralité de portions reliées entre elles, chaque portion formant un arc de cercle de rayons distinct centré sur l'axe de rotation de la platine.

Préférentiellement, l'éloignement du pion par rapport à l'axe de rotation du fauteuil peut être modifié par ledit sélecteur située sur l'embase de façon à permettre son coulissement, au choix, dans l'une desdites portions de rainures.

Avantageusement, ladite piste est une piste fermée entourant l'axe de rotation de ladite plaque, de façon à permettre le pivotement illimité du fauteuil quand le pion est placé dans les positions adaptées.

Selon un mode de réalisation avantageux, le siège auto comprend des seconds moyens de limitation du pivotement dudit fauteuil par rapport à ladite embase sur une plage angulaire au moins égale à 360°.

Avantageusement, lesdits seconds moyens de limitation du pivotement comprennent une platine et une pièce de blocage de cette platine, la platine étant entraînée en rotation par rapport à la pièce de blocage, autour de l'axe de rotation du fauteuil, par le pivotement de ce fauteuil par rapport à l'embase, la pièce de blocage étant mobile entre au moins deux positions :
- une position de repos dans laquelle elle ne fait pas obstacle à la rotation de la platine,
- au moins une position de blocage dans laquelle elle bloque la rotation de la platine dans un sens,
la platine portant un ergot apte à faire passer la pièce de blocage de sa position de repos à sa position de blocage quand le pivotement de la platine amène l'ergot au contact de la pièce de blocage, de façon à interrompre ce pivotement.

De préférence, ladite pièce de blocage peut prendre deux positions de blocage distinctes en fonction du sens de rotation de la platine ayant amené l'ergot de la platine au contact de la pièce de blocage, l'ergot bloquant le pivotement de la platine, dans chacune desdites position de blocage, dans ce sens de rotation.

La pièce de blocage peut ainsi permettre ainsi de limiter la rotation de la platine à une plage angulaire de 360°.

Avantageusement, ladite platine est liée audit fauteuil, et en ce que ladite pièce de blocage est portée par l'embase.

De façon préférentielle, ladite pièce de blocage est un basculeur monté pivotant sur ladite embase autour d'un axe parallèle à l'axe de rotation du fauteuil, et apte à coopérer avec le bord de ladite platine.

De façon avantageuse, ladite plaque sensiblement horizontale constitue ladite platine.

De préférence, ladite embase comprend un système de fixation au siège du véhicule comprenant des pinces Isofix.

Selon un mode de réalisation particulier de l'invention, ledit siège auto pour enfant comprend des moyens de verrouillage du pivotement du fauteuil par rapport à l'embase dans chacune desdites positions de transport et deux commandes de déverrouillage du pivotement, permettant d'autoriser le pivotement du fauteuil de ladite position de transport vers, respectivement, une position d'installation à droite et une position d'installation à gauche, le siège auto comprenant également un moyen de sélection de l'une desdites commandes, mobile entre une première position dans laquelle il permet l'actionnement d'une première desdites commandes et empêche l'actionnement de la seconde desdites commandes et une seconde position dans laquelle il permet l'actionnement de la seconde desdites commandes et empêche l'actionnement de la première desdites commandes.

Ce moyen de sélection, qui peut également être mis en oeuvre sur un siège auto indépendamment des caractéristiques de limitation du pivotement, permet d'éviter que la commande permettant le pivotement du fauteuil ne soit facilement accessible par un utilisateur placé dans le véhicule, et évite donc de mauvaises utilisations du système de pivotement. Elle permet également de réduire le risque que le fauteuil soit pivoté dans une position inappropriée pour le transport d'un enfant.

Préférentiellement, le moyen de sélection mobile comprend une plaque de sélection mobile entre une première position dans laquelle elle vient en contact avec et/ou recouvre au moins partiellement la seconde desdites commandes pour empêcher son actionnement et est éloignée de la première desdites commandes, et une seconde position dans laquelle elle vient en contact avec et/ou recouvre au moins partiellement la première desdites commandes et est éloigné de la seconde desdites commandes.

Une telle plaque de sélection, qui peut avantageusement être placée sur la face avant du siège auto, permet de mettre en oeuvre facilement la sélection de la commande actionnable.

De façon avantageuse, ladite plaque de sélection est mobile par coulissement entre lesdites première et seconde positions.

De préférence, ladite plaque de sélection comprend une zone de préhension permettant à l'utilisateur de la déplacer entre lesdites première et seconde positions.

Selon un mode de réalisation préférentiel, lesdites commandes de déverrouillage du pivotement de la position et ledit moyen de sélection mobile sont placés sur la face avant d'un élément du siège auto lié en pivotement au fauteuil.

Le choix de la commande de pivotement accessible peut ainsi être fait relativement facilement par l'utilisateur.

De façon avantageuse, les commandes de déverrouillage du pivotement de la position forment, quand elles sont actionnées, des poignées permettant l'entraînement en rotation du fauteuil par l'utilisateur.

Ainsi, ces commandes permettent d'effectuer le déverrouillage et d'entraîner le siège en rotation en un seul geste de l'utilisateur.

Préférentiellement l'actionnement de chacune desdites commandes se fait par un appui sur une face de ladite commande, ledit moyen de sélection mobile empêchant l'accès à ladite face, dans l'une de ses positions, pour empêcher l'actionnement de ladite commande.

De façon avantageuse, le siège auto permet deux positions de transport, l'une dans laquelle le fauteuil est orienté vers l'avant du véhicule et l'autre dans laquelle le fauteuil est orienté vers l'arrière du véhicule, lesdites commandes de déverrouillage du pivotement permettant de faire pivoter le fauteuil depuis l'une ou l'autre desdites positions de transport respectivement vers sa position d'installation à droite et sa position d'installation à gauche.

Un seul système de commande de déverrouillage de pivotement peut ainsi être utilisé dans les différentes configurations.

### 5. Liste des figures

D'autres caractéristiques et avantages de l'invention apparaîtront plus clairement à la lecture de la description suivante de modes de réalisation de l'invention, donnée à titre illustratif et non limitatif et accompagnée des dessins, parmi lesquels :
- la figure 1 est une vue en perspective d'un siège auto selon un mode de réalisation de l'invention ;
- la figure 2 est une vue de dessus de l'embase et du support pivotant du siège auto de la figure 1 dans une première configuration du système de verrouillage du pivotement ;
- la figure 3 est une vue de dessus de l'embase et du support pivotant du siège auto de la figure 1 dans une seconde configuration du système de verrouillage du pivotement ;
- la figure 4 est une vue de dessus de l'embase et du support pivotant du siège auto de la figure 1 dans une troisième configuration du système de verrouillage du pivotement ;
- la figure 5 est une vue en perspective de l'embase et du support pivotant du siège auto de la figure 1, dans la configuration de la figure 4 ;
- la figure 6 est une vue en perspective éclatée montrant l'embase et une partie du support pivotant du siège auto de la figure 1, dans la configuration de la figure 3 ;
- la figure 7 est une vue en perspective éclatée montrant l'embase et une partie du support pivotant du siège auto de la figure 1, dans la configuration de la figure 4 ;
- la figure 8 est une vue de dessus simplifiée de l'embase et d'une platine du support pivotant quand le fauteuil est orienté face à la route ;
- la figure 9 est une vue de dessus simplifiée de l'embase et d'une platine du support pivotant quand le fauteuil est orienté latéralement vers la gauche, en position d'installation, et est libre de pivoter vers la position « face à la route » ;
- la figure 10 est une vue de dessus simplifiée de l'embase et d'une platine du support pivotant quand le fauteuil est orienté latéralement vers la gauche, en position d'installation, et est libre de pivoter vers la position « dos à la route » ;
- la figure 11 est une vue de détail en perspective montrant le bord de la platine du support pivotant, coopérant avec des éléments de l'embase, quand le fauteuil est proche de sa position « dos la route » ;
- la figure 12 est une vue de détail de dessus montrant le bord de la platine du support pivotant, coopérant avec des éléments de l'embase, quand le fauteuil est proche de sa position « dos la route » ;
- la figure 13 est une vue de détail de dessus montrant le bord de la platine du support pivotant, coopérant avec des éléments de l'embase, quand le fauteuil est bloqué dans la position « dos à la route » ;
- la figure 14 est une vue simplifiée de l'embase et de certains éléments de la platine du support pivotant d'un siège auto selon une première variante de l'invention ;
- les figures 15 et 16 sont des vues de dessus simplifiées de l'embase et de certains éléments de la platine du support pivotant de la figure 14, respectivement en position de verrouillage « face à la route » et en position de déverrouillage ;
- la figure 17 est une vue simplifiée de l'embase et de certains éléments de la platine du support pivotant d'un siège auto selon une deuxième variante de l'invention ;
- la figure 18 est une vue simplifiée de l'embase et de certains éléments de la platine du support pivotant d'un siège auto selon une variante de l'invention, offrant un autre mode de sélection de la position « face à la route » ou « dos à la route » ;
- les figures 19 et 20 sont des vues de détail de l'embase et de certains éléments de la platine du support pivotant de la figure 18, dans deux positions possibles ;
- la figure 21 est une vue de dessus de l'embase et de certains éléments de la platine du support pivotant d'un siège auto selon une autre variante de l'invention, offrant un autre mode de blocage de la rotation de la platine.

### 6. Description de modes de réalisation de l'invention

### 6.0 Principe de l'invention

L'invention concerne donc un siège auto pour enfant, comprenant un fauteuil mobile en rotation, de façon à pouvoir prendre d'une part deux positions de transport, dans lesquelles l'enfant est installé dos à la route (c'est-à-dire regardant vers l'arrière du véhicule) ou face à la route (c'est-à-dire regardant vers l'avant du véhicule), et d'autre part au moins une (généralement deux) position d'installation de l'enfant, face à une porte du véhicule (c'est-à-dire sensiblement à 90° de l'une des positions de transport).

Les positions de transport dos à la route ou face à la route ne doivent pas être choisies aléatoirement ou en fonction des désirs de l'enfant ou de la personne qui l'installe. En effet, la sécurité de l'enfant suppose, notamment en fonction du poids de celui-ci, que l'utilisation de la position adéquate, le siège ayant été développé et configuré dans ce but. Il existe cependant un risque que, après installation de l'enfant, le fauteuil étant dans une position d'installation, la personne ayant installé l'enfant se trompe, et ramène, par habitude ou inattention, le fauteuil dans la mauvaise position, par rapport au poids de l'enfant.

Pour éviter ce risque, l'invention prévoit des moyens de sélection, qui permettent de sélection la position de transport adéquate. Typiquement, tant que le poids de l'enfant est inférieur à un seuil prédéterminé, la position dos à la route est sélectionnée. Lorsque l'enfant a grandi, et que son poids dépasse ce seuil, la position face à la route est sélectionnée (ainsi, généralement, on effectue deux sélections pendant le temps d'usage par un enfant).

Ces moyens de sélection imposent, pour le retour du fauteuil en position de transport, un retour vers la position de transport sélectionnée, et empêche l'accès à l'autre position de transport.

On décrit ci-après un exemple de siège pivotant mettant en oeuvre l'invention (§ 6.1) et plusieurs aspects optionnels d'un tel siège. Des modes de réalisation de sélection d'une position de transport selon l'invention sont plus précisément décrits à partir du § 6.9.

### 6.1 Principe du siège pivotant

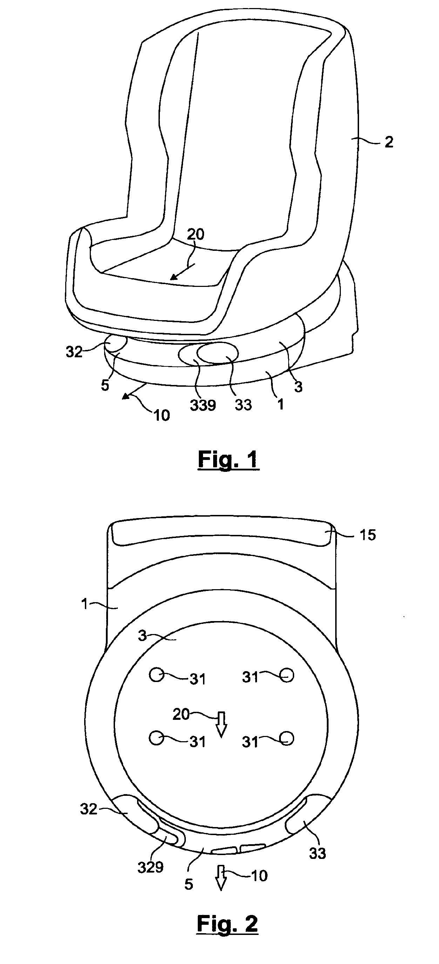

La figure 1 présente en perspective un siège auto selon un mode de réalisation de l'invention. Ce siège auto comporte une embase 1 qui est destinée à être placée sur un siège passager d'un véhicule. Un élément d'appui arrière 15 de cette embase peut être prévu, et présenter une forme adaptée pour prendre appui contre le dossier du siège du véhicule. De façon avantageuse, cette embase peut être fixée au siège du véhicule par l'intermédiaire d'un système de pinces venant se verrouiller sur des crochets correspondants liés à la structure du véhicule. Ce système de fixation, qui n'est ni représenté ni décrit dans la présente demande, est normalisé et connu sous le nom de « système de fixation Isofix ».
Le siège auto peut également mettre en oeuvre un système de retenue par une sangle anti-basculement (dite également de « top tether ») permettant de relier la partie supérieure de l'élément d'appui arrière 15 à un point d'ancrage du véhicule. Notamment, il peut s'agir d'un siège auto tel que décrit dans la demande de brevet conjointe, intitulée « Siège auto pour enfant, destiné à équiper un siège de véhicule », déposée le même jour que la présente demande et incorporée par référence.

Le siège auto comporte un fauteuil 2 dans lequel un enfant peut être installé, qui est monté fixement à un support pivotant 3 qui est lui-même assemblé de façon pivotante sur l'embase 1. Ainsi, le fauteuil 2 peut pivoter par rapport à l'embase 1, autour d'un axe sensiblement vertical.

### 62 Poignées de déverrouillage du pivotement

Sur les figures 2 à 5, l'embase 1 et le support pivotant 3 sont représentés sans le fauteuil 2, afin de permettre une meilleure visibilité du support pivotant 3. Ce support pivotant 3 comporte, sur sa face supérieure, quatre lumières 31 prévues pour des vis de fixation du fauteuil 2.

Dans la position de transport « face route » du siège auto, qui est représentée notamment par les figures 1 à 3, la position angulaire du support pivotant 3 par rapport à l'embase 1 est bloquée par un système de verrouillage de la rotation. Dans le mode de réalisation représenté, une poignée droite 32 de déverrouillage du pivotement et une poignée gauche 33 du déverrouillage du pivotement sont prévus sur la portion du support pivotant 3 orientée vers l'avant du fauteuil 2. Ces deux poignées permettent de déverrouiller la position angulaire du support pivotant 3 par rapport à l'embase 1, pour permettre le pivotement du fauteuil 2.

Il est à noter que l'homme du métier pourra sans difficulté imaginer d'autres systèmes de verrouillage et de déverrouillage de la position angulaire du support pivotant par rapport à l'embase que ceux des modes de réalisation décrits dans la présente demande, sans sortir du cadre de l'invention.

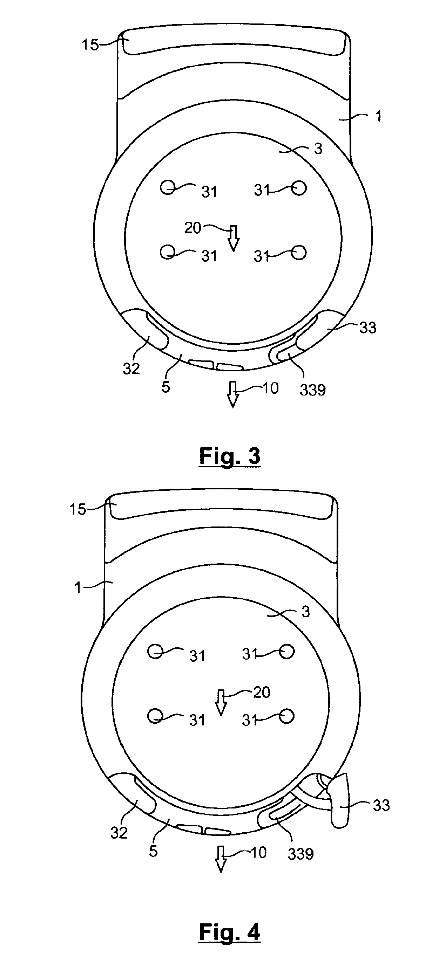

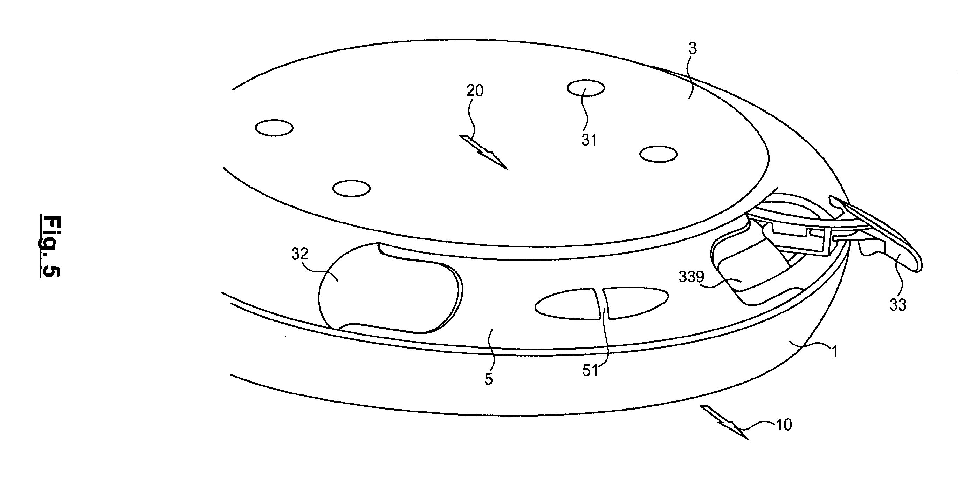

Sur les figures 4 et 5, la poignée gauche 33 de déverrouillage du pivotement est représentée actionnée. Comme le montrent ces figures, l'actionnement de la poignée se fait en la tirant vers l'avant, ce qui la fait pivoter autour d'un axe sensiblement vertical. Cet actionnement nécessite donc, pour l'utilisateur, de passer ses doigts sous la poignée. Quand l'utilisateur tire la poignée gauche 33 jusqu'à sa position actionnée représentée par les figures 4 et 5, la poursuite de son mouvement vers la gauche entraîne la rotation du support pivotant 3 et du fauteuil 2. Ainsi, dans ce mode de réalisation, la poignée gauche 33 permet successivement de déverrouiller le système de blocage du pivotement du fauteuil, et de contrôler (au moins en partie) ce pivotement.

### 6.3 Fonctionnement de la poignée de déverrouillage du pivotement

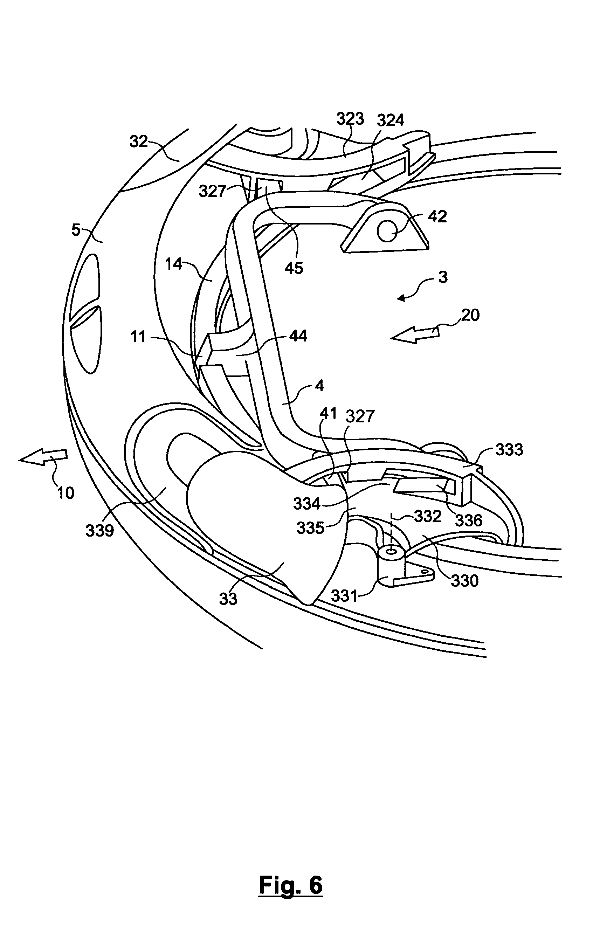

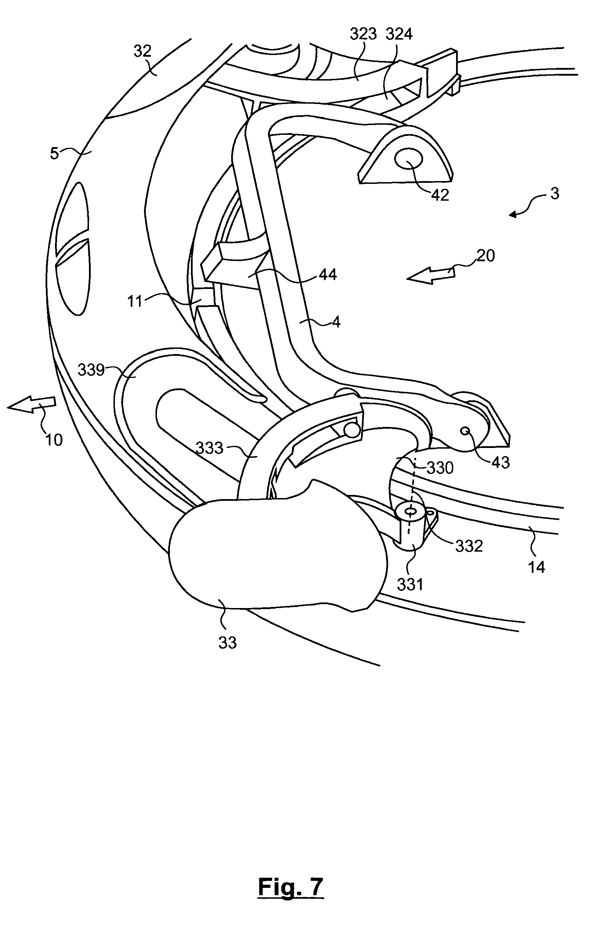

Les figures 6 et 7, qui représentent l'embase 1 et une partie des pièces constituant le support pivotant 3, montrent le fonctionnement de la poignée gauche 33 de déverrouillage selon un mode de réalisation possible de l'invention.

Comme le montrent ces figures, la poignée 33 est fixée sur un bras 330, qui porte une charnière 331 permettant le pivotement du bras 330 et donc de la poignée 33 par rapport au support pivotant 3 autour d'un axe 332 sensiblement vertical. Le bras 330 porte également une rampe 333 formant une surépaisseur qui, dans un plan horizontal, forme un arc de cercle centré sur l'axe 332. Cette rampe 333 présente une rainure 334 s'ouvrant sur sa périphérie, dans laquelle est engagé un plot 41 horizontal d'un levier de verrouillage 4.

La forme de la rainure 334 est telle qu'elle impose au plot 41 une hauteur dépendante de la position angulaire de la poignée 33. Ainsi, quand la poignée 33 n'est pas actionnée, ou pendant le début de son mouvement d'actionnement, le plot 41 est en appui sur la surface plane 335 de la rainure 334. Pendant cette première phase du déplacement de la poignée 33, la hauteur du plot 41 ne varie pas. Quand le mouvement d'actionnement de la poignée 33 se poursuit, le plot 41 vient en contact avec le plan incliné 336 de la rainure 334. Le mouvement d'actionnement de la poignée 33 a alors pour effet de soulever le plot 41, jusqu'à la position représentée à la figure 7, dans laquelle le plot 41 est à sa position la plus haute.

### 6.4 Le levier de verrouillage 4

Le plot 41 fait partie d'un levier de verrouillage 4 qui présente une forme générale en U. Aux deux extrémités des branches de ce U, ce levier de verrouillage 4 est assemblé au support pivotant 3 par des charnières coaxiales 42 et 43. Au milieu de sa portion formant la base du U, le levier 4 porte un pêne 44.

Le mouvement de la poignée 33 entre sa position non actionnée et sa position actionnée entraîne une variation de la hauteur du plot 41. Ce plot 41 étant porté par une branche du levier 4, le mouvement d'actionnement de la poignée 33 entraîne un pivotement vers le haut de ce levier 4 autour de ces charnières 42 et 43.

Dans la position de repos de la poignée 33 représentée à la figure 6, le levier 4 est en position basse et son pêne 44 est engagée dans une encoche 11 ménagée dans une nervure 14 de l'embase 1. La coopération du pêne 44 avec l'encoche 11 a pour effet de bloquer le pivotement du support pivotant 3 par rapport à l'embase 1.

Lorsque l'actionnement de la poignée 33 entraîne le pivotement vers le haut du levier 4, comme le représente la figure 7, le pêne 44 se soulève et se désengage de l'encoche 11. Le pivotement du support pivotant 3 par rapport à l'embase 1 n'est alors plus bloquée, et l'utilisateur, en poursuivant sa traction sur la poignée 33, peut faire pivoter le support pivotant 3 et le fauteuil qui y est fixé vers la gauche.

Le système de verrouillage du pivotement comprenant notamment les poignées 33 et 32, le levier 4 et la nervure 14 est symétrique par rapport à un plan vertical formant le plan de symétrie du fauteuil 2. La description qui est faite ci-dessus de la poignée gauche s'applique donc, mutatis mutandis, à la poignée droite. En particulier, le levier 4 présente, sur sa branche droite, un plot 45 symétrique au plot 41, qui est engagé dans une rainure 324 d'une rampe 323 liée à la poignée 32.

Il est à noter que les rainures 324 et 334 présentent chacune une encoche, respectivement 327 et 337, permettant le soulèvement du plot 41 ou 45 qui y est engagé quand la poignée est dans sa position non actionnée. En effet, l'action sur une seule des poignées 32 ou 33 permet de lever le levier 4, l'autre poignée restant alors dans sa position de repos. L'engagement du plot 41 ou 45 dans l'encoche correspondante empêche alors l'actionnement de la deuxième poignée, tant que le levier n'est pas revenu à sa position basse.

Il est à noter qu'un moyen de rappel, non représenté, peut avantageusement maintenir le levier 4 dans sa position basse quand aucune des poignées 32 et 33 n'est actionnée. De même, des moyens de rappel adaptés peuvent ramener les poignées 32 et 33 vers leurs positions non actionnées, notamment quand le fauteuil arrive dans sa position « face à la route ».

### 6.5 Palette frontale

L'actionnement des poignées 32 et 33 se fait donc en les tirant vers l'avant. Cet actionnement nécessite de pouvoir prendre appui sur la face cachée de chacune de ces poignées. Selon un mode de réalisation avantageux de l'invention, une plaque de sélection 5 est montée sur le support pivotant 3, entre les poignées 32 et 33, de façon à être coulissante le long de ce support pivotant 3.

Elle peut ainsi prendre une première position représentée par la figure 2, dans laquelle elle vient en contact avec le bord de la poignée gauche 33 et est éloignée de la poignée droite 32. Dans cette première position, la plaque de sélection 5 laisse apparaître un creux 329 dans le support pivotant 3, à proximité de la poignée 32, qui permet l'introduction d'un doigt sur la face arrière de la poignée 32 afin de l'actionner. Dans une variante de ce mode de réalisation, la plaque de sélection 5 peut dans cette première position chevaucher légèrement le bord de la poignée gauche 33 de façon à empêcher son actionnement.

La plaque de sélection 5 peut également prendre une seconde position représentée notamment par les figures 1 et 3 à 7, dans laquelle elle vient en contact avec le bord de la poignée droite 32, en recouvrant le creux 329 et est éloignée de la poignée gauche 33. Dans cette seconde position, la plaque de sélection 5 laisse apparaître un creux 339 dans le support pivotant 3, à proximité de la poignée 33, qui permet l'introduction d'un doigt sur la face arrière de la poignée 33 afin de l'actionner. Dans une variante de ce mode de réalisation, la plaque de sélection 5 peut dans cette première position chevaucher légèrement le bord de la poignée gauche 33 de façon à empêcher son actionnement.

La plaque de sélection 5 présente une zone de préhension 51 permettant de faciliter son coulissement entre sa première position et sa seconde position. Ainsi, la plaque de sélection 5 permet, dans l'une de ses positions, l'actionnement de la poignée 32 pour tourner le siège vers la droite et, dans l'autre de ses positions l'actionnement de la poignée 33 pour tourner le siège vers la gauche.

### 6.6 Pivotement du siège

Ainsi, quand l'utilisateur veut faire pivoter le siège de sa position « face à la route » vers une position tournée vers la gauche, il agit sur la plaque de sélection 5 pour la placer dans sa seconde position, puis tire sur la poignée gauche 33 qui pivote alors jusqu'à sa position de déverrouillage. La poursuite de la traction de l'utilisateur sur cette poignée entraîne ensuite le pivotement du support pivotant 3, et du fauteuil 2 qui lui est fixé, vers la gauche.

De même, quand l'utilisateur veut faire pivoter le siège de sa position « face à la route » vers une position tournée vers la droite, il agit sur la plaque de sélection 5 pour la placer dans sa première position, puis tire sur la poignée droite 32 qui pivote alors jusqu'à sa position de déverrouillage. La poursuite de la traction de l'utilisateur sur cette poignée entraîne ensuite le pivotement du support pivotant 3, et du fauteuil 2 qui lui est fixé, vers la droite.

L'utilisateur, lors de l'installation du siège dans le véhicule, place naturellement la plaque de sélection 5 de façon à pouvoir, facilement, tourner le fauteuil vers la portière la plus proche. Ainsi, il place la plaque de sélection dans sa première position si le siège est installé à côté de la portière droite du véhicule, et dans sa seconde position si le siège est installé à côté de la portière gauche. En conséquence, la plaque de sélection 5 rend très difficile le déverrouillage du pivotement du fauteuil par un passager assis à côté du siège auto, qui souhaiterait par exemple tourner vers lui l'enfant installé dans le siège auto. Cette plaque permet notamment d'éviter cette mauvaise utilisation du siège auto, qui est dangereuse pour l'enfant.

Il est à noter que la nervure 14 peut comprendre une seconde encoche diamétralement opposée à l'encoche 11, par rapport à l'axe de pivotement du support pivotant. Le pêne 44 peut s'engager dans cette seconde encoche lorsque le support pivotant 3, et le fauteuil 2 qui lui est fixé, sont tournés vers l'arrière, dans la position dite « dos route ». Ainsi, le même système de verrouillage permet d'assurer le verrouillage du siège en position « face route » et en position « dos route ».

### 6.7 première variante

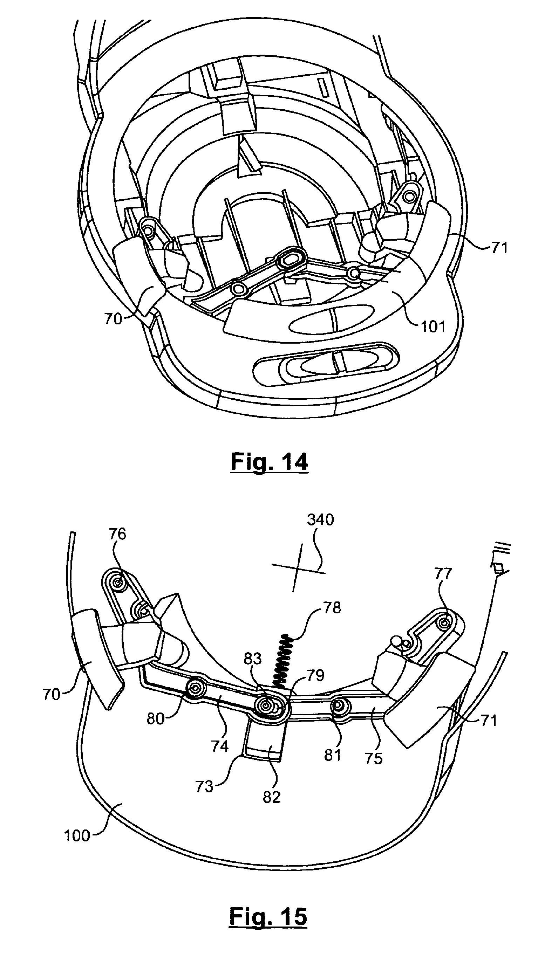

Selon une première variante de ce mode de réalisation, illustrée par les figures 14 à 16, les poignées 32 et 33 ainsi que le système de levier de verrouillage 4 du pivotement peuvent être remplacés par un autre système de verrouillage des positions « face à la route » et « dos à la route ».

Comme l'illustre la figure générale 14, ce système comprend une embase 100 portant un support pivotant pour le fauteuil 2 (Le support pivotant et le fauteuil 2 ne sont pas représentés sur cette figure ainsi que sur les deux figures suivantes 15 et 16 pour des raisons de clarté). Ce support pivotant comprend notamment une plaque de sélection 101 et deux poignées 70 et 71.

La plaque de sélection 101 joue un rôle similaire à la plaque de sélection 5 précédemment décrite. En effet, elle autorise, par un coulissement latéral à droite ou à gauche, l'actionnement de l'une des deux poignées 70 ou 71, tout en rendant l'autre inopérante.

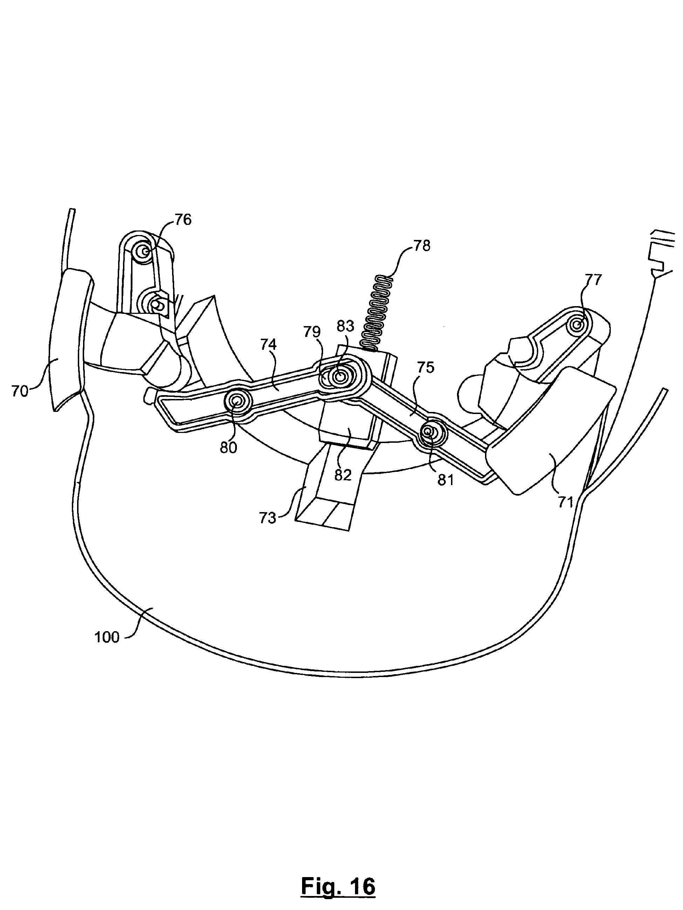

Les figures 15 et 16 décrivent plus en détails le système de verrouillage situé à l'interface de l'embase 100 et du support pivotant. Il comprend un ensemble d'éléments interagissant les uns avec les autres qui sont décrits ci-après.

Parmi ces éléments, deux poignées 70 et 71 peuvent pivoter autour d'un axe de rotation sensiblement vertical défini par des charnières 76 et 77 placées à l'une de leurs extrémités respectives et fixées au support pivotant. Les deux poignées 70 et 71 ont respectivement une surface de contact avec les extrémités dites distales de deux leviers 74 et 75 faisant aussi parties du support pivotant.

Ces deux leviers 74 et 75 sont montés pivotant autour de points d'attache, respectivement 80 et 81. Ils comportent une extrémité dite proximale, proche du plan médian de l'embase, et une extrémité distale à l'opposé. Les deux extrémités proximales sont percées chacune d'un trou oblong (79 pour l'un, non représenté pour l'autre) permettant à un axe de rotation 83 sensiblement vertical de traverser ces trous. Cet axe de rotation 83 est fixé à un pêne 82 en forme de pavé droit monté coulissant sur le support pivotant.

Ce pêne 82 peut effectuer un mouvement de translation sensiblement horizontal dans la direction « avant »-« arrière » par rapport au support pivotant, ce qui lui permet de s'engager dans une gâche 73, vers laquelle il est repoussé par un ressort 78.

Cette gâche 73 et une autre gâche identique (non représentée) sont situées à l'avant et à l'arrière de l'intérieur de l'embase 100. Elles ont sensiblement la taille et la forme du pêne 82 et peuvent chacune alternativement le recevoir.

Quand le système de déverrouillage est en mode « repos », ou position de verrouillage, le fauteuil 2 est en position « face à la route » ou « dos à la route », verrouillé à l'embase 100. Tel que représenté sur la figure 15, le fauteuil 2, non représenté pour des raisons de clarté, est en position « face à la route ». Le ressort 78 est détendu et pousse le pêne 82 dans la gâche 73. Grâce à l'action intermédiaire des deux leviers 74 et 75, le pêne 82 maintient les deux poignées contre l'embase 100.

Quand la poignée 70 est actionnée par l'utilisateur, le système de déverrouillage passe en mode « actionné » (c'est-à-dire déplacé par l'utilisateur), ou position de déverrouillage, comme représenté sur la figure 16. La poignée 70 effectue une rotation autour de sa charnière 76 au cours de laquelle sa surface de contact pousse l'extrémité distale du levier 74 de façon à faire pivoter ce levier dont l'extrémité proximale entraîne alors un mouvement de translation du pêne hors de la gâche 73. En conséquence, le ressort 78 se trouve comprimé par le pêne 82. Par ailleurs, la poignée 71, restant dans une position non actionnée (dans laquelle elle peut être maintenue par un ressort de rappel non représenté), perd son contact avec le levier 75. L'utilisateur peut alors faire tourner le support pivotant sur l'axe 340.

De façon générale, ce déverrouillage du support pivotant par rapport à l'embase 100 permet à l'utilisateur de choisir entre une position du fauteuil 2 « face à la route » ou « dos à la route ». Sur la figure 16, la position initiale est « face à la route ». La poignée 70 étant tirée par l'utilisateur, elle entraîne donc le pivotement du fauteuil 2 dans le sens des aiguilles d'une montre vers l'autre position de repos ou position de verrouillage, ici, la position « dos à la route ». Après relâchement de la poignée 70, le ressort 78 peut se détendre et pousser le pêne 82 dans la seconde gâche de l'embase 100, ce qui verrouille à nouveau le fauteuil 2.

De la même manière, l'actionnement de la poignée 71 a un effet similaire à celui de la poignée 70 avec pour effet de faire tourner le fauteuil 2 en sens inverse.

Pour un retour à la position « face à la route » initiale, il suffit d'actionner l'une des deux poignées 70 ou 71. Le fauteuil 2 se retrouve déverrouillé de l'embase 100 et peut être positionné dans l'une des deux positions choisies par l'utilisateur.

### 6.8 deuxième variante

Selon une deuxième variante de ce mode de réalisation, le support pivotant de rotation comporte une couronne pivotante de rotation, destinée à porter le fauteuil 2, et un système de verrouillage des positions « face à la route » ou « dos à la route ».

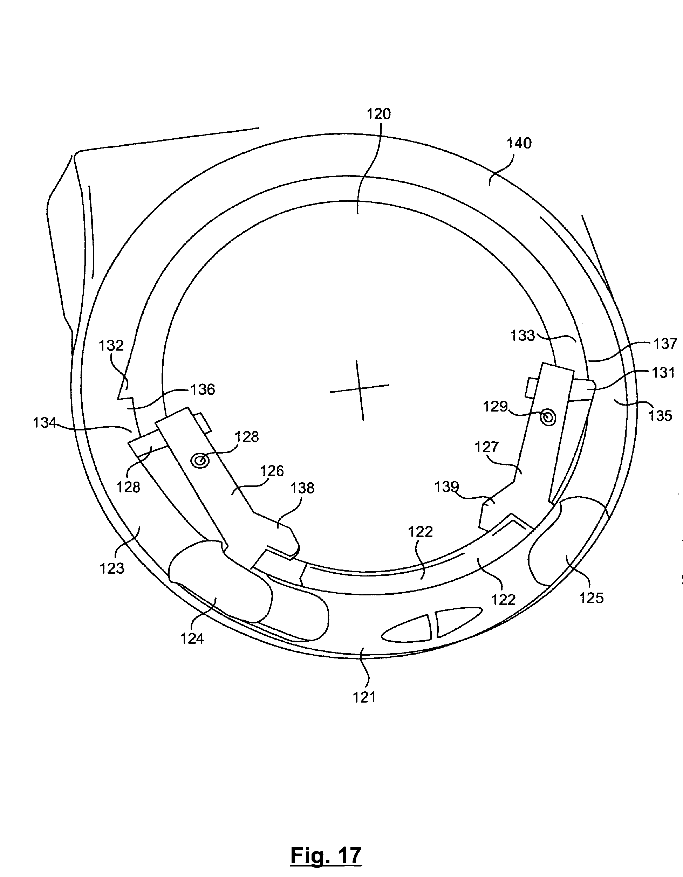

Comme illustré sur la figure 17, l'embase 120 supporte une couronne pivotante 123 portant elle-même une palette de sélection 121 et deux poignées 124 et 125.

L'embase 120 possède, sous la couronne pivotante 123, un bord intérieur quasi-circulaire 140 (représenté en pointillé sur la figure 17). Ce bord 140 présente deux zones de verrouillage latérale diamétralement opposées. Chacune de ces zones de verrouillage comporte deux rampes, respectivement 132 et 134 pour l'un des côtés et 133 et 135 pour le côté opposé. Ces rampes 132, 133, 134 et 135 s'écartent du diamètre d'origine du bord intérieur, pour aboutir chacune respectivement à une saillie 136 et 137 formant butées. Le bord intérieur 140 forme ainsi une piste sur laquelle viennent en contact deux languettes 130 et 131, portées par la couronne pivotante 123 et faisant office de verrous.

Chacune de ces deux languettes 130 et 131 est escamotable respectivement à l'intérieur de leviers 126 et 127 montés sur la couronne pivotante 123. Ils peuvent eux-mêmes pivoter respectivement autour de deux axes sensiblement verticaux 128 et 129. L'une des extrémités des leviers 126 et 127 est en forme de Y. L'une des branches de chaque Y est relié respectivement aux poignées 124 et 125. Les deux autres branches des Y, 138 et 139, ont chacune une surface de contact avec une portion de blocage 122 solidaire de la plaque de sélection 121. Cette portion de blocage 122 peut coulisser entre ces deux surfaces de contact.

Les poignées 124 et 125, fixées aux leviers 126 et 127, sont par défaut positionnées contre l'embase 120 et alternativement bloquées par la portion de blocage 122 en fonction de la position de la plaque de sélection 121.

La couronne pivotante 123, supportant le fauteuil 2, est par défaut verrouillée dans une des positions de repos « face à la route » ou « dos à la route ». La position représentée sur la figure 17 est « face à la route ». La palette de sélection est déplacée à gauche bloquant ainsi la poignée 125 et le levier 127. Les deux languettes 130 et 131 sont engagées dans les extrémités des rampes 134 et 135 contre les saillies 136 et 137 faisant ainsi office de verrous. La couronne 123 ne peut donc être tournée ni dans un sens ni dans l'autre sans action spécifique de l'utilisateur.

Afin de pouvoir déverrouiller la couronne pivotante 123 de la position « face à la route » et l'emmener à la position « dos à la route », l'utilisateur doit saisir et tirer la poignée 124. Il en résulte un pivotement du levier 138 sur l'axe 128. La languette 130 s'éloigne de la rampe 128 et ne bloque alors plus la rotation de la couronne 123 par rapport à l'embase 120. Quand la couronne est tournée dans le sens des aiguilles d'une montre, la languette 130 peut donc atteindre la rampe 132. Parallèlement, la languette 131 suit la rampe 135, l'obligeant ainsi à se rétracter dans le levier 127. La couronne 123 peut continuer à tourner jusqu'à ce que la languette 135 s'engage sur la rampe 134, sorte progressivement du levier 127 et vienne en contact avec la butée 136. Dans la suite du mouvement, si l'utilisateur relâche la poignée 124, la languette 130 peut s'engager sur la rampe 132, se rétracter en suivant la piste jusqu'à ce qu'elle puisse ressortir du levier 126 et s'engager sur la rampe 133 où elle finit par buter sur la saillie 137. Le système, en position « dos à la route », est à nouveau verrouillé.

En reprenant l'illustration de la figure 17, l'utilisateur peut décider de faire coulisser la palette de sélection 121 vers la gauche, libérant ainsi la poignée 125. Par l'actionnement de cette poignée 125, il peut faire tourner la couronne 123 et par là même le fauteuil 2 dans le sens opposé pour aboutir à la position « dos à la route ». De la même manière, la position « dos à la route » peut être déverrouillée par l'actionnement de l'une des poignées sélectionnée et permettre le déplacement du fauteuil jusqu'à la position « face à la route ».

### 6.9 Blocage avant - arrière

Selon l'invention, le siège auto comprend des moyens de limitation du pivotement du fauteuil à une première zone angulaire quand le fauteuil est orienté vers l'avant du véhicule, et à une seconde zone angulaire quand le fauteuil est orienté vers l'arrière du véhicule. Deux modes de réalisation possibles de cette caractéristique de l'invention sont décrits ci-après.

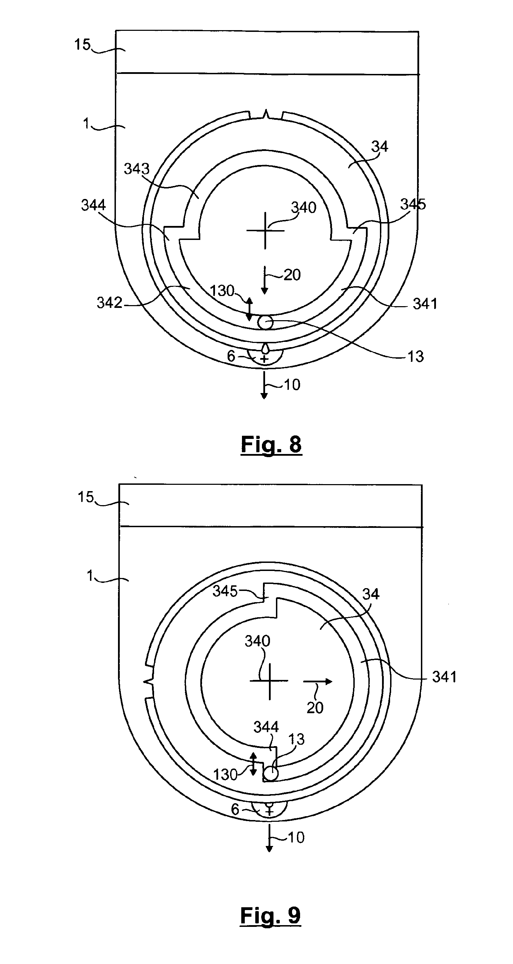

La figure 8 est une vue de dessus schématique d'une platine 34 horizontale faisant partie du support pivotant 3 selon un mode de réalisation de l'invention. Cette platine 34, qui est destinée à pivoter par rapport à l'embase 1 autour de l'axe 340 perpendiculaire au plan de la platine 34, comprend une rainure 341 entourant l'axe 340. Cette rainure 341 est composée de deux portions semi-circulaire, respectivement 342 et 343, centrées sur l'axe 340 et de diamètres différents, et dont les extrémités respectives sont reliées les unes aux autres par des portions rectilignes 344 et 345.

Un pion 13, qui est porté par l'embase 1, est engagé dans la rainure 341. Ce pion est mobile en coulissement par rapport à l'embase 1 selon la direction indiquée par la flèche 130. Plus précisément, un bouton de commande permet de faire passer le pion 13 d'une position avant dans laquelle il est éloigné de l'axe 340 d'une distance correspondant au rayon de la portion de rainure 342, de telle sorte que le pion 13 puisse glisser dans cette portion de rainure 342, et une position arrière dans laquelle il est éloigné de l'axe 340 d'une distance correspondant au rayon de la portion de rainure 343, de telle sorte que le pion 13 puisse glisser dans cette portion de rainure 343.

Selon un mode de réalisation particulier de l'invention, le bouton de commande (non représenté sur les figures) est lié au pion 13 par l'intermédiaire d'un moyen de rappel, tel qu'un ressort. Ainsi, l'utilisateur peut faire passer le bouton de commande d'une position à l'autre, en déformant les moyens de rappel même si le pion 13 ne peut pas changer de position. En revanche, dès que le pion est libre de changer de position, il est alors entrainé par les moyens de rappel jusqu'à la position correspondante à la position du bouton de commande.

La configuration représentée par la figure 8 correspond à celle représentée à la figure 1, dans laquelle le fauteuil 2 est en position « face à la route ». A partir de cette position, le support pivotant 3 et donc la platine 34 peuvent pivoter d'un quart de tour vers la droite ou vers la gauche sans que le pion 13, qui coulisse alors dans la portion de rainure 342, ne gêne ce pivotement.

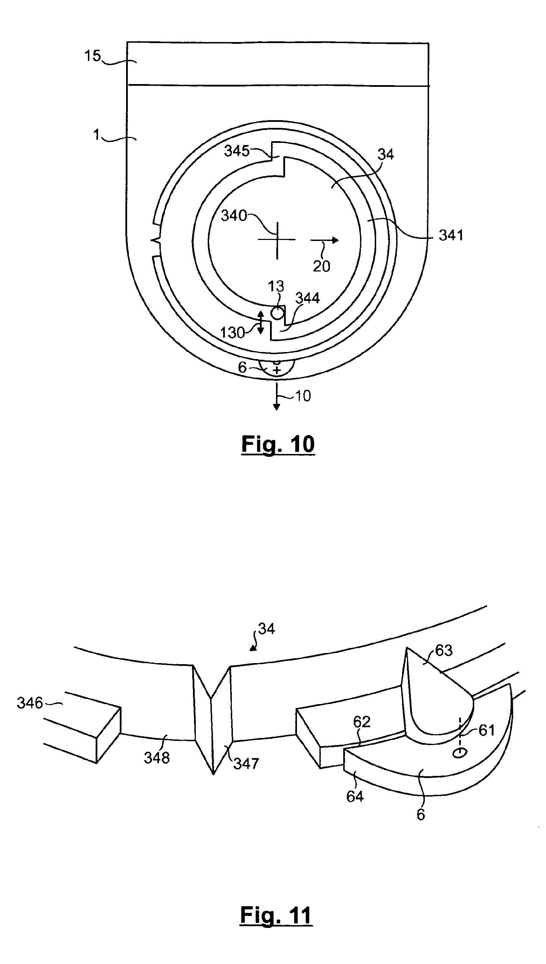

En revanche, dans la position représentée à la figure 9, dans laquelle le fauteuil 2, et donc le support pivotant 3 et la platine 34, ont effectué un pivotement d'un quart de tour vers la gauche, le pion 13 arrive en butée contre l'extrémité de la portion de rainure 342, et bloque alors la rotation de la platine 34, et donc du support pivotant 3 et du fauteuil 2. Pour poursuivre cette rotation vers la position « dos route » du fauteuil 2, il est nécessaire d'agir sur le bouton de commande du pion 13 afin de faire coulisser ce pion 13 dans la portion de rainure 344, jusqu'à sa position représentée à la figure 10.

Une fois que le pion 13 est dans cette position, il peut coulisser librement dans la portion de rainure 343, en autorisant donc le pivotement du fauteuil 2 entre les positions perpendiculaires à la route et la position dos route, mais ne peut plus se rapprocher de la position « face route ». Bien évidemment, le passage de la position « face route » vers la position « dos route » en pivotant vers la droite, ou le passage de la position « dos route » vers la position « face route » se font de manière similaire.

Le bouton de commande du pion 13 n'est de préférence pas facilement accessible. Il peut par exemple être placé sur la face de l'embase 1 placée sur l'assise du siège du véhicule. Ainsi, l'utilisateur n'est pas tenté de changer la position de ce pion 13 tant que l'âge de l'enfant à transporter ne le justifie pas. Le fauteuil 2 ne peut ainsi pivoter qu'entre une unique position de transport de l'enfant (« face route » ou « dos route », selon la position de ce bouton 13) et une position d'installation, dans laquelle il est tourné d'un quart de tour vers la portière.

Ce blocage de la rotation par un pion coulissant dans une rainure peut être mis en oeuvre sur un siège auto à fauteuil pivotant indépendamment des autres caractéristiques de blocage ou de limitation de la rotation. Il est à noter également qu'un système similaire pourrait être mis en place avec un plus grand nombre de portions de rainures formant des arcs de cercles de diamètre différents, pour limiter la rotation du fauteuil à une plage angulaire déterminée, pour chaque position du pion. Dans certains modes de réalisation possibles, la rainure pourrait ne pas entourer complètement l'axe de rotation, pour limiter la plage angulaire totale de la rotation du fauteuil.

Dans d'autres modes de réalisation possibles, la rainure peut au contraire entourer complètement l'axe de rotation du fauteuil sans être fermée, certaines positions angulaires pouvant être atteinte par le siège avec deux positions distinctes du pion.

### 6.11 variante pour la sélection de la position

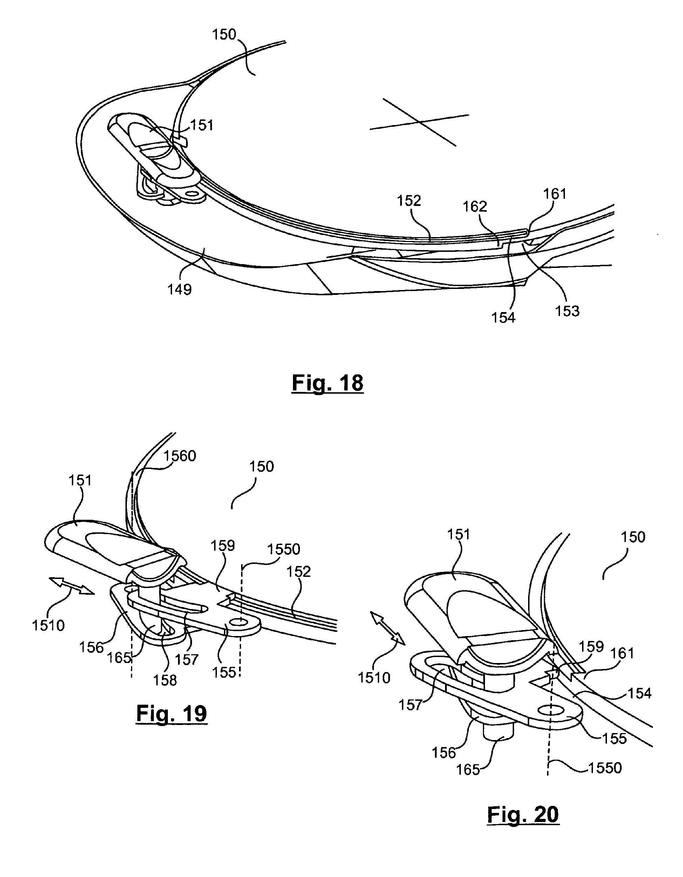

Les figures 18 à 20 montrent un mode de réalisation possible de l'invention, permettant une sélection d'une zone angulaire « face à la route » ou «dos à la route ». La figure 18 montre ainsi l'embase 149 d'un siège auto qui porte une platine 150 pivotante, destinée à supporter le fauteuil 2 (non représenté).

La platine 150 présente une forme de disque dont le bord périphérique forme une surface cylindrique. Ce bord périphérique présente deux rainures.

Une rainure supérieure 152 est pratiquée le long de l'arête entre ce bord périphérique et la face supérieure de la platine 150, et en parcourt sensiblement plus de la moitié de la périphérie. Cette rainure 152 est limitée par deux butées, une sur le côté droit (butée 161) et une sur le côté gauche (butée non représentée). Les butées sont placées de telle sorte que cette rainure supérieure 152 est orientée vers l'avant quand le fauteuil est orienté vers l'avant.

Une rainure inférieure 153 est pratiquée le long de l'arête entre ce bord périphérique et la face inférieure de la platine 150, et en parcourt sensiblement plus de la moitié de la périphérie. Cette rainure 153 est limitée par deux butées, une sur le côté droit (butée 162) et une sur le côté gauche (butée non représentée). Les butées sont placées de telle sorte que cette rainure inférieure 153 est orientée vers l'arrière quand le fauteuil est orienté vers l'avant.

Sur les côtés de la platine, deux zones de recouvrement 154 du bord périphérique présentent à la fois les rainures inférieures et supérieures.

L'embase 149 porte un commutateur 151 qui contrôle la rotation de la platine 150 comme le montrent les figures 19 et 20. Ce commutateur peut, selon un mode de réalisation particulier, être lié aux moyens de contrôle de rotation de la platine pour qu'il soit possible d'agir sur le commutateur même quand les moyens de contrôle de rotation de la platine ne peuvent pas changer de position. Dans ce cas, le changement de position s'effectue par la suite, sous l'action des moyens de rappel, dès que les aux moyens de contrôle de rotation de la platine peuvent changer de position pour que celle-ci corresponde à la position du commutateur.

Le commutateur 151 est monté coulissant sur l'embase 149, dans la direction représentée par les flèches 1510. Il comprend une tige 165, sensiblement verticale, qui traverse des trous oblongs courbés 157 et 158, formés respectivement dans des languettes 155 et 156, respectivement montées pivotantes sur l'embase autour des axes 1550 et 1560. Selon le positionnement du commutateur 151, une partie latérale, 159 ou 160, en forme d'ergot, de l'une de ces languettes s'insère respectivement dans l'une des rainures 152 ou 153.

Lors de la sélection d'une position du fauteuil 2, « face route » ou « dos route », l'utilisateur fait glisser le commutateur sur la gauche ou sur la droite.

Quand le fauteuil est en position « face route », le commutateur 151 est sur la gauche et la tige 165 est dans les parties gauches des trous oblongs 157 et 158. L'ergot 159 est inséré sur la rainure supérieure 152 et l'ergot 160 est retiré hors de la rainure inférieure 153. La rotation de la platine 150 est donc limitée par l'étendue de la rainure 152 et des deux butées qui lui sont associées (la butée 161 sur la droite et une autre butée sur le bord opposé de la platine 150, non représentée). Par conséquent, la platine et le fauteuil 2 ne peuvent être tournés que jusqu'à des positions latérales sensiblement perpendiculaires à la position « face route ». Dans chacune de ces positions latérales, le commutateur 151 est face à l'une des zones de recouvrement 154 du bord périphérique de la platine 150.

Pour pouvoir avoir accès à la position « dos route », l'utilisateur doit amener le fauteuil sur l'une de ces positions latérales afin de pouvoir faire glisser le commutateur 151 sur la droite. La tige 165 peut alors être déplacée sur le coté droit des trous 157 et 158. L'ergot 159 se dégage alors de la rainure supérieure 152 tandis que l'ergot 160 prend place dans la rainure inférieure 153. La platine 150 peut ainsi pivoter dans une nouvelle plage angulaire qui s'étend entre les deux positions latérales sur la droite ou la gauche en passant par la position « dos route », l'ergot 160 coulissant dans la rainure 153 entre les butées (162 sur la droite et une butée analogue, non représentée, sur le bord opposé de la platine 150) qui la délimitent.

Bien entendu, le passage de la plage angulaire « dos route » à la plage angulaire « face route » se fait de façon analogue, en déplaçant le commutateur vers la gauche quand la platine est dans l'une des positions latérales.

### 6.12 Le blocage droite-gauche dans la position « dos route »

Les figures 8 à 10 illustrent un mode de réalisation particulier de l'invention. Comme le montrent ces figures 8, le bord de la platine 34, essentiellement circulaire centré sur l'axe 340, est formé par une languette 346 ayant une épaisseur inférieure à l'épaisseur de la portion centrale de la platine 34. Cette languette 346 est interrompue au niveau d'une zone 348 du bord de la platine, à l'arrière du fauteuil 2. Un ergot 347, s'étendant sur toute l'épaisseur de la portion centrale de la platine 34, est situé au milieu de cette portion 348.

Le bord de la platine 34 coopère avec un basculeur 6 monté pivotant par rapport à l'embase 1 autour d'un axe 61 vertical. Ce basculeur 6 présente une surface 62 apte à coulisser le long du bord extérieur de la languette 346 et un ergot 63 apte à coulisser le long de la surface supérieure de la languette 346.

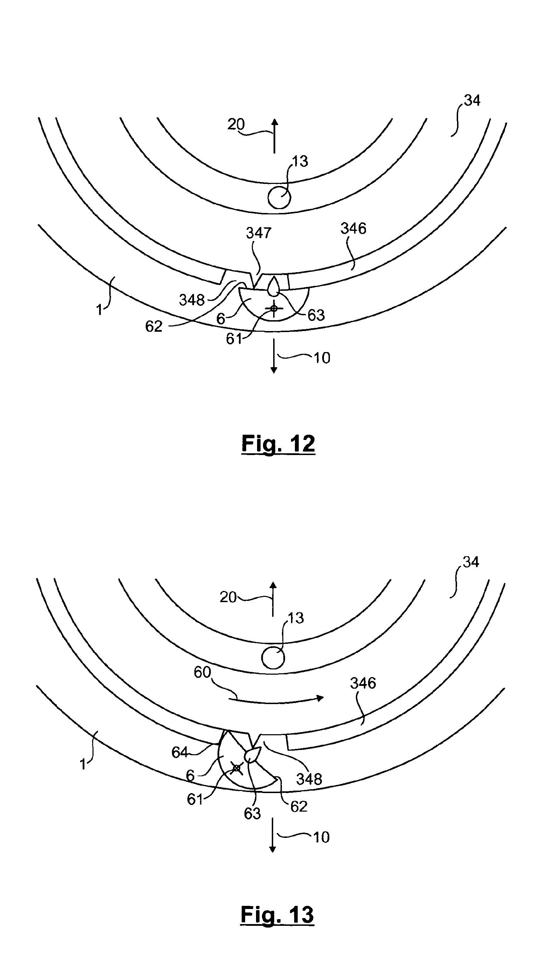

Comme le montrent les figures 11 et 12, tant que l'ergot 63 du basculeur 6 n'est pas en contact avec l'ergot 347 de la platine 34, le basculeur 6 ne gêne pas le pivotement de cette platine 34. Quand le pivotement de la platine 34 entraîne l'entrée en contact de l'ergot 364 de la platine 34 avec l'ergot 63 du basculeur 6, comme le représente la figure 13, ce contact entraîne le pivotement du basculeur 6 dont la surface 62 n'est, à cet endroit, plus en contact avec le bord de la languette 346. Ce pivotement place le basculeur 6 en butée empêchant la poursuite de la rotation de la platine 34 dans le sens représenté par la flèche sur la figure 13. En effet, le basculeur 6 est en butée d'une part au niveau de son ergot 63, en contact avec l'ergot 347, et d'autre part au niveau de son bord latéral 64 qui vient en contact avec l'extrémité de la languette 346.

Bien évidemment l'ergot n'empêche pas le pivotement de la platine dans l'autre sens, qui entraîne alors un retour du basculeur 6 dans sa position représentée par les figures 11 et 12. Par ailleurs, il est évident que le blocage du pivotement se fait de la même façon quand le siège arrive de la droite ou de la gauche.

Ce système de blocage de la rotation de la platine 34 permet donc d'empêcher cette platine 34 d'effectuer une rotation de plus d'un tour, tout en autorisant cependant une rotation complète de 360° de la platine. Cette rotation complète est particulièrement importante pour permettre le verrouillage correct du fauteuil en position « dos route », qui nécessite une position angulaire précise correspondant à la position dans laquelle la platine 34 est bloquée en rotation par le basculeur 6, dans un sens ou dans l'autre.

Il est à noter que ce système de blocage de la rotation de la platine peut également être mis en oeuvre sur un siège auto à fauteuil pivotant indépendamment des autres caractéristiques de blocage ou de limitation de la rotation.

Ce blocage de la rotation, empêchant de faire faire plus d'un tour au siège, peut permettre d'empêcher une sangle (appelée « top tether ») pouvant être liée au haut du dossier du fauteuil, de s'enrouler autour du fauteuil, et en particulier de s'enrouler autour de la tête de l'enfant, à la suite d'une mauvaise utilisation. Cette fonction peut être particulièrement adaptée pour un siège auto équipé d'une telle sangle montée sur un enrouleur, par exemple placé dans le dossier du fauteuil.

### 6.13 variante pour le blocage de la rotation

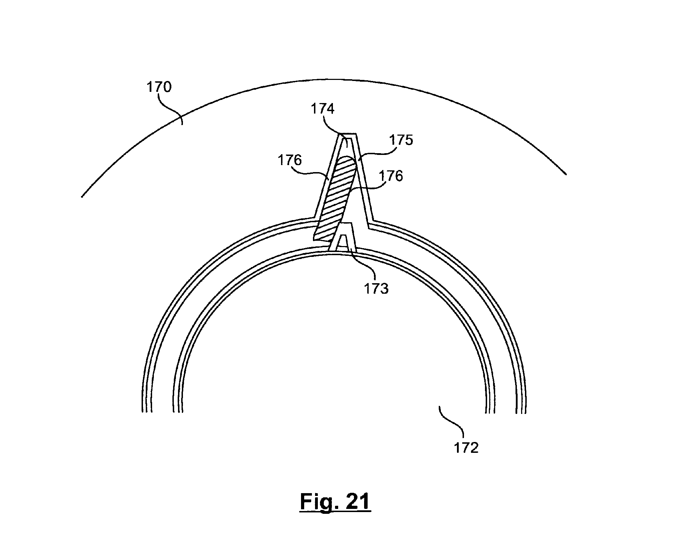

Selon une variante de cet aspect, illustrée par la figure 21, la platine 34 et le basculeur 6 peuvent être remplacés par un autre système de blocage de la rotation de la platine supportant le fauteuil 2.

La figure 21 est une vue de dessus d'une embase 170, dans laquelle est définie une encoche 174. Cette encoche 174 contient un basculeur 171, capable de basculer autour d'un axe sensiblement vertical de la droite vers la gauche, ou inversement, dans les limites des bords 175 et 176. Une platine 172, supportant le fauteuil (non représenté), est montée pivotante au centre de l'embase. Cette platine comporte un ergot 173 pouvant entrer en contact avec l'extrémité du basculeur 171.

Quand la platine 172 pivote dans le sens anti-horaire, l'ergot 173 vient se mettre en contact avec le côté droit du basculeur 171 qui l'empêche de poursuivre sa rotation. Pour faire un tour complet, il doit repartir dans la direction opposé jusqu'à ce qu'il rencontre à nouveau le basculeur 171.

Ce système de blocage de la rotation de la platine 172 et son ergot 173 permet donc d'empêcher cette platine 172 d'effectuer une rotation de plus d'un tour, tout en autorisant cependant une rotation complète de 360° de la platine dans les deux sens.

## Revendications

1. Siège auto pour enfant, comprenant une embase (1) destinée à être placée sur l'assise d'un siège d'un véhicule et un fauteuil (2) monté pivotant sur ladite embase (1), autour d'un axe sensiblement vertical, de façon à pouvoir prendre :
- au moins deux positions de transport, l'une dans laquelle le fauteuil (2) est orienté vers l'avant du véhicule et l'autre dans laquelle le fauteuil (2) est orienté vers l'arrière du véhicule, et
- au moins une position d'installation à droite, et/ou une position d'installation à gauche, dans lesquelles le fauteuil (2) est orienté, respectivement, vers la droite et vers la gauche du véhicule,
**caractérisé en ce qu'**il comprend des moyens de sélection de l'une desdites position de transport, de façon que, depuis l'une desdites positions d'installation, ledit fauteuil ne puisse être déplacé que vers la position de transport sélectionnée.

2. Siège auto pour enfant selon la revendication 1, **caractérisé en ce qu'**il comprend, pour chaque position d'installation, des moyens de limitation du pivotement du fauteuil (2) sur une première plage angulaire incluant la position de transport dans laquelle le fauteuil (2) est orienté vers l'avant du véhicule et au moins une desdites positions d'installation, ou sur une seconde plage angulaire incluant la position de transport dans laquelle le fauteuil (2) est orienté vers l'arrière du véhicule et au moins une desdites positions d'installation.

3. Siège auto pour enfant selon la revendication 2, **caractérisé en ce que** lesdits moyens de sélection comprennent au moins un sélecteur permettant à l'utilisateur de choisir la zone angulaire à laquelle le pivotement du fauteuil est limité, ledit sélecteur étant lié audits moyens de limitation du pivotement du fauteuil par l'intermédiaire de moyens de rappel, de telle sorte que ledit sélecteur puisse être placé dans une position de sélection correspondant à une zone angulaire quand ledit fauteuil n'est pas dans ladite zone angulaire, les moyens de limitation du pivotement du fauteuil limitant la position du fauteuil à cette zone angulaire à partir du moment où ledit fauteuil pénètre dans ladite zone angulaire.

4. Siège auto pour enfant selon l'une quelconque des revendications 2 et 3, **caractérisé en ce que** lesdits moyens de limitation du pivotement comprennent une plaque sensiblement horizontale dans laquelle est tracée une piste et un pion (13) engagé dans ladite piste, la plaque étant entraînée en rotation par rapport au pion (13), autour de l'axe de rotation du fauteuil (2), par le pivotement de ce fauteuil (2) par rapport à l'embase (1), ledit pion (13) étant mobile entre au moins deux positions correspondant respectivement aux positions de transport orientées vers l'avant ou vers l'arrière, et la piste étant formée de façon à ce que le pion (13) puisse coulisser exclusivement dans une première portion de la piste, quand il est dans une première position, et exclusivement dans une seconde portion de la piste quand il est dans une seconde position.

5. Siège auto pour enfant selon l'une quelconque des revendications 2 à 4, **caractérisé en ce que** ladite piste est une rainure comprenant une pluralité de portions reliées entre elles, chaque portion formant un arc de cercle de rayons distinct centré sur l'axe de rotation (340) de la platine.

6. Siège auto pour enfant selon l'une quelconque des revendications précédentes, **caractérisé en ce qu'**il comprend des seconds moyens de limitation du pivotement dudit fauteuil par rapport à ladite embase (1) sur une plage angulaire au moins égale à 360°.

7. Siège auto pour enfant selon la revendication 6, **caractérisé en ce que** lesdits seconds moyens de limitation du pivotement comprennent une platine (34) et une pièce de blocage de cette platine (34), la platine (34) étant entraînée en rotation par rapport à la pièce de blocage, autour de l'axe de rotation (340) du fauteuil (2), par le pivotement de ce fauteuil (2) par rapport à l'embase (1), la pièce de blocage étant mobile entre au moins deux positions :
- une position de repos dans laquelle elle ne fait pas obstacle à la rotation de la platine (34),
- au moins une position de blocage dans laquelle elle bloque la rotation de la platine (34) dans un sens,
la platine (34) portant un ergot (347) apte à faire passer la pièce de blocage de sa position de repos à sa position de blocage quand le pivotement de la platine (34) amène l'ergot (347) au contact de la pièce de blocage, de façon à interrompre ce pivotement.

8. Siège auto pour enfant selon la revendication 7, **caractérisé en ce que** ladite pièce de blocage peut prendre deux positions de blocage distinctes en fonction du sens de rotation de la platine (34) ayant amené l'ergot (347) de la platine (34) au contact de la pièce de blocage, l'ergot bloquant le pivotement de la platine, dans chacune desdites position de blocage, dans ce sens de rotation.

9. Siège auto pour enfant selon l'une quelconque des revendications 7 et 8, **caractérisé en ce que** ladite platine (34) est liée audit fauteuil (2), et **en ce que** ladite pièce de blocage est portée par l'embase (1).

10. Siège auto pour enfant selon la revendication 8, **caractérisé en ce que** ladite pièce de blocage est un basculeur (6) monté pivotant sur ladite embase (1) autour d'un axe (61) parallèle à l'axe de rotation (340) du fauteuil (2), et apte à coopérer avec le bord de ladite platine (34).

11. Siège auto pour enfant selon l'une quelconque des revendications précédentes, **caractérisé en ce qu'**il comprend des moyens de verrouillage du pivotement du fauteuil (2) par rapport à l'embase (1) dans chacune desdites positions de transport et deux commandes de déverrouillage du pivotement, permettant d'autoriser le pivotement du fauteuil de ladite position de transport vers, respectivement, une position d'installation à droite et une position d'installation à gauche, le siège auto comprenant également un moyen de sélection de l'une desdites commandes, mobile entre une première position dans laquelle il permet l'actionnement d'une première desdites commandes et empêche l'actionnement de la seconde desdites commandes et une seconde position dans laquelle il permet l'actionnement de la seconde desdites commandes et empêche l'actionnement de la première desdites commandes.

12. Siège auto pour enfant selon la revendication 11, **caractérisé en ce que** le moyen de sélection mobile comprend une plaque de sélection (5) mobile entre une première position dans laquelle elle vient en contact avec et/ou recouvre au moins partiellement la seconde desdites commandes pour empêcher son actionnement et est éloignée de la première desdites commandes, et une seconde position dans laquelle elle vient en contact avec et/ou recouvre au moins partiellement la première desdites commandes et est éloigné de la seconde desdites commandes.

13. Siège auto pour enfant selon la revendication 12, **caractérisé en ce que** ladite plaque de sélection (5) est mobile par coulissement entre lesdites première et seconde positions.

14. Siège auto pour enfant selon la revendication 12, **caractérisé en ce que** le ladite plaque de sélection (5) comprend une zone de préhension (51) permettant à l'utilisateur de la déplacer entre lesdites première et seconde positions.

15. Siège auto pour enfant selon l'une quelconque des revendications précédentes, **caractérisé en ce que** lesdites commandes de déverrouillage du pivotement et ledit moyen de sélection mobile sont placés sur la face avant d'un élément du siège auto lié en pivotement au fauteuil (2).

16. Siège auto pour enfant selon l'une quelconque des revendications précédentes, **caractérisé en ce que** lesdites commandes de déverrouillage du pivotement forment, quand elles sont actionnées, des poignées (32, 33) permettant l'entraînement en rotation du fauteuil (2) par l'utilisateur.

17. Siège auto pour enfant selon l'une quelconque des revendications précédentes, **caractérisé en ce que** l'actionnement de chacune desdites commandes se fait par un appui sur une face de ladite commande, ledit moyen de sélection mobile empêchant l'accès à ladite face, dans l'une de ses positions, pour empêcher l'actionnement de ladite commande.

## Patentansprüche

1. Autokindersitz, mit einem Sockel (1), der auf der Sitzfläche eines Kraftfahrzeugsitzes angebracht wird und mit einem Sitz (2), der drehbar um eine in etwa senkrechte Achse auf dem besagten Sockel (1) angebracht ist, so dass dieser Sitz die folgenden Positionen einnehmen kann:
- mindestens zwei Transportpositionen, wobei in der einen der Sitz (2) nach vorne und in der anderen nach hinten gerichtet ist und,
- mindestens eine rechtsliegende und/oder eine linksliegende Installationsposition, in welcher der Sitz (2) jeweils nach rechts oder links im Fahrzeug gerichtet ist,
**dadurch gekennzeichnet, dass** er über Mittel zum Wählen einer der besagten Transportpositionen verfügt, so dass der besagte Sitz, ausgehend von einer der besagten Installationspositionen, nur in die vorgewählte Transportposition bewegt werden kann.

2. Autokindersitz nach Anspruch 1, **dadurch gekennzeichnet, dass** er für jede Installationsposition, über Mittel zum Begrenzen der Drehung des Sitzes (2) über einen ersten Winkelbereich verfügt, welcher die Transportposition umfasst, in welcher der Sitz (2) nach vorne gerichtet ist, und mindestens eine der besagten Installationspositionen, oder über einen zweiten Winkelbereich, welcher die Transportposition umfasst, in welcher der Sitz (2) nach hinten gerichtet ist, und mindestens eine der besagten Installationspositionen.

3. Autokindersitz nach Anspruch 2, **dadurch gekennzeichnet, dass** die besagten Mittel zur Auswahl mindestens eine Auswahlvorrichtung aufweisen, die dem Benutzer die Wahl eines Winkelbereichs ermöglicht, auf den die Drehung des Sitzes begrenzt ist, wobei die besagte Auswahlvorrichtung derart durch Rückführungsmittel mit den besagten Mitteln zum Begrenzen der Drehung des Sitzes verbunden ist, dass die besagte Auswahlvorrichtung in eine Auswahlposition eingestellt werden kann, die einem Winkelbereich entspricht, in dem sich der besagte Sitz zu dem Zeitpunkt nicht befindet, wobei die Mittel zum Begrenzen der Drehung des Sitzes die Position des Sitzes beim Eintreten des besagten Sitzes in den besagten Winkelbereich auf diesen Winkelbereich begrenzen.

4. Autokindersitz nach einem der Ansprüche 2 oder 3, **dadurch gekennzeichnet, dass** die besagten Mittel zum Begrenzen der Drehung eine in etwa horizontal liegende Platte aufweisen, mit einer Führungsrille und einem in die besagte Führungsrille ragenden Zapfen (13), wobei die Platte gegenüber dem Zapfen (13) um die Drehachse des Sitzes (2) in eine Drehbewegung durch die Drehung dieses Sitzes (2) im Verhältnis zum Sockel (1) versetzt wird, wobei der besagte Zapfen (13) zwischen mindestens zwei Positionen beweglich ist, die jeweils der nach vorne oder der nach hinten gerichteten Transportposition entsprechen und, wobei die Führungsrille so gestaltet ist, dass der Zapfen (13) ausschließlich innerhalb eines ersten Teils dieser Führungsrille gleiten kann, wenn er sich in einer ersten Position befindet und ausschließlich innerhalb eines zweiten Teils der Führungsrille gleiten kann, wenn er sich in einer zweiten Position befindet.

5. Autokindersitz nach einem der Ansprüche 2 bis 4, **dadurch gekennzeichnet, dass** die besagte Führungsrille eine Vielzahl von untereinander verbundenen Teilbereichen aufweist, wobei jeder Teilbereich jeweils einen Kreisbogen mit verschiedenem Radius bildet, wobei das Zentrum dieser Kreisbögen die Drehachse (340) der Platte ist.

6. Autokindersitz nach einem der vorherigen Ansprüchen, **dadurch gekennzeichnet, dass** er über zweite Mittel zum Begrenzen der Drehung des besagten Sitzes im Verhältnis zum besagten Sockel (1) über einen Winkelbereich von mindestens 360° verfügt.

7. Autokindersitz nach Anspruch 6, **dadurch gekennzeichnet, dass** die besagten zweiten Mittel zum Begrenzen der Drehung eine Drehscheibe (34) sowie ein Teil zum Blockieren dieser Drehscheibe (34) aufweisen, wobei die Drehscheibe (34) in eine Umdrehung gegenüber dem Teil zum Blockieren um die Drehachse (340) des Sitzes (2) mitgenommen wird, durch die Drehung dieses Sitzes (2) im Verhältnis zum Sockel (1), wobei das Teil zum Blockieren zwischen mindestens zwei Positionen beweglich ist:
- eine Ruheposition, bei der es die Drehung der Drehscheibe (34) nicht behindert,
- mindestens einer Blockierungsposition, bei der es die Drehung der Drehscheibe (34) in eine Richtung blockiert,
wobei die Drehscheibe (34) einen Vorsprung (347) aufweist, welcher den Übergang des Teils zum Blockieren von der Ruheposition in die Blockierungsposition ermöglicht, wenn die Drehung der Drehscheibe (34) den Vorsprung (347) in Berührung mit dem Teil zum Blockieren bringt, um die Drehbewegung zu unterbrechen.

8. Autokindersitz nach Anspruch 7, **dadurch gekennzeichnet, dass** das besagte Teil zum Blockieren zwei verschiedene Blockierungspositionen einnehmen kann, als Funktion der Drehrichtung der Drehscheibe (34), welche den Vorsprung (347) der Drehscheibe (34) in Berührung mit dem Teil zum Blockieren gebracht hat, wobei der Vorsprung in dieser Drehrichtung die Drehung der Drehscheibe in jeder der besagten Blockierungspositionen blockiert.

9. Autokindersitz nach einem der Ansprüche 7 oder 8, **dadurch gekennzeichnet, dass** die besagte Drehscheibe (34) mit dem besagten Sitz (2) verbunden ist und, dass das besagte Teil zum Blockieren vom Sockel (1) getragen wird.

10. Autokindersitz nach Anspruch 8, **dadurch gekennzeichnet, dass** das besagte Teil zum Blockieren eine Kippvorrichtung (6) ist, die auf dem besagten Sockel (1) drehbar um eine Achse (61) angebracht ist, die parallel zur Drehachse (340) des Sitzes (2) ist und mit dem Rand der besagten Drehscheibe (34) zusammenwirken kann.

11. Autokindersitz nach einem der vorhergehenden Ansprüche, **dadurch gekennzeichnet, dass** er über Mittel zum Verriegeln der Drehung des Sitzes (2) im Verhältnis zum Sockel (1) in jeder der besagten Transportpositionen sowie über zwei Steuervorrichtungen zum Entriegeln der Drehung verfügt, welche das Drehen des Sitzes von der besagten Transportposition in jeweils eine Installationsposition nach rechts und eine Installationsposition nach links ermöglichen, wobei der Autokindersitz auch über ein Mittel zum Auswählen einer der zwei besagten Steuervorrichtungen verfügt, beweglich zwischen einer ersten Position, in der es das Betätigen einer ersten der besagten Steuervorrichtungen ermöglicht und dabei das Betätigen der zweiten Steuervorrichtung verhindert, und einer zweiten Position, in der es das Betätigen der zweiten der besagten Steuervorrichtungen ermöglicht und dabei das Betätigen der ersten Steuervorrichtung verhindert.

12. Autokindersitz nach Anspruch 11, **dadurch gekennzeichnet, dass** das bewegliche Auswahlmittel eine Auswahlplatte (5) aufweist, die zwischen einer ersten Position, in der sie die zweite der besagten Steuervorrichtungen berührt und/oder zumindest teilweise bedeckt, um deren Betätigung zu verhindern und von der ersten der besagten Steuervorrichtungen entfernt ist und einer zweiten Position, in der sie die erste der besagten Steuervorrichtungen berührt und/oder zumindest teilweise bedeckt und von der zweiten der besagten Steuervorrichtungen entfernt ist, beweglich ist.

13. Autokindersitz nach Anspruch 12, **dadurch gekennzeichnet, dass** die besagte Auswahlplatte (5) zwischen den besagten ersten und zweiten Positionen gleiten kann.

14. Autokindersitz nach Anspruch 12, **dadurch gekennzeichnet, dass** die besagte Auswahlplatte (5) einen Greifbereich (51) aufweist, der es dem Benutzer ermöglicht, sie zwischen der ersten und zweiten Position zu bewegen.

15. Autokindersitz nach einem der vorhergenenden Ansprüchen, **dadurch gekennzeichnet, dass** die besagten Steuerelemente zum Entriegeln der Drehung und das besagte Mittel für die mobile Auswahl auf der vorderen Fläche eines Elementes des Autokindersitzes angebracht sind, welches drehbar mit dem Sitz (2) verbunden ist.

16. Autokindersitz nach einem der vorhergenenden Ansprüchen, **dadurch gekennzeichnet, dass** die besagten Steuerelemente zum Entriegeln der Drehung Handgriffe (32, 33) bilden wenn sie betätigt werden, um es dem Benutzer zu ermöglichen, den Sitz (2) zu drehen.

17. Autokindersitz nach einem der vorhergenenden Ansprüchen, **dadurch gekennzeichnet, dass** das Betätigen eines jeden der besagten Steuerelemente durch Druck auf eine Fläche des besagten Steuerelementes erfolgt, wobei das besagte mobile Auswahlelement den Zugang zur besagten Fläche in einer ihrer Positionen verhindert, um das Betätigen des besagten Steuerelementes zu verhindern.

## Claims

1. Child car seat, comprising a base (1) to be positioned on the seat section of a vehicle seat and a seat body (2) pivotably mounted on said base (1), around a substantially vertical axis, so as to be suitable for assuming:
- at least two travel positions, one wherein the seat body (2) is facing the front of the vehicle and the other wherein the seat body (2) is facing the rear of the vehicle, and
- at least one right arranging position, and/or one left arranging position, wherein the seat body (2) is facing, respectively, to the right and the left of the vehicle,
**characterised in that** it comprises means for selecting one of said travel positions, such that, from one of said arranging positions, said seat body can only be moved to the selected travel position.

2. Child car seat according to claim 1, **characterised in that** it comprises, for each arranging position, means for limiting the pivoting of the seat body (2) over a first angular range including the travel position wherein the seat body (2) is facing the front of the vehicle and at least one of said arranging positions, or over a second angular range including the travel position wherein the seat body (2) is facing the rear of the vehicle and at least one of said arranging positions.

3. Child car seat according to claim 2, **characterised in that** said selection means comprise at least one selector allowing the user to select the angular zone to which the pivoting of the seat body is limited, said selector being connected to said seat body pivoting limiting means via return means, such that said selector can be set to a selection position corresponding to an angular zone when said seat body is not in said angular zone, the seat body pivoting limiting means limiting the position of the seat body to this angular zone once said seat body enters said angular zone.

4. Child car seat according to any of claims 2 and 3, **characterised in that** said pivoting limiting means comprise a substantially horizontal plate wherein a track is marked and a pin (13) is inserted into said track, the plate being rotated in relation to the pin (13), around the axis of rotation of the seat body (2), by pivoting the seat body (2) in relation to the base (1), said pin (13) being movable between at least two positions corresponding to the forward or rear facing travel positions, respectively, and the track being formed such that the pin (13) can only slide in a first portion of the track, when it is in a first position, and only in a second portion of the track when it is in a second position.

5. Child car seat according to any of claims 2 to 4, **characterised in that** said track is a groove comprising a plurality of interconnected portions, each portion forming an arc of a circle having a separate radius centred on the rotation axis (340) of the platen.

6. Child car seat according to any of the above claims, **characterised in that** it comprises second means for limiting the pivoting of said seat body in relation to said base (1) over an angular range at least equal to 360°.

7. Child car seat according to claim 6, **characterised in that** said second pivoting limiting means comprise a platen (34) and a part for locking this platen (34), the platen (34) being rotated in relation to the locking part, around the rotation axis (340) of the seat body (2), by pivoting the seat body (2) in relation to the base (1), the locking part being movable between at least two positions:
- an idle position wherein it does not impede the rotation of the platen (34),
- at least one locking position wherein it locks the rotation of the platen (34) in one direction,
the platen (34) bearing a lug (347) suitable for switching the locking part from the idle position thereof to the locking position when the pivoting of the platen (34) brings the lug (347) in contact with the locking part, so as to discontinue this pivoting.

8. Child car seat according to claim 7, **characterised in that** said locking part can adopt two separate locking positions according to the direction of rotation of the platen (34) bringing the lug (347) of the platen (34) in contact with the locking part, the lug locking the pivoting of the platen, in each of said locking positions, in this direction of rotation.

9. Child car seat according to any of claims 7 et 8, **characterised in that** said platen (34) is connected to said seat body (2), and **in that** said locking part is borne by the base (1).

10. Child car seat according to claim 8, **characterised in that** said locking part is a lever (6) pivotably mounted on said base (1) around a parallel axis (61) in relation to the rotation axis (340) of the seat body (2), and suitable for cooperating with the edge of said platen (34).

11. Child car seat according to any of the above claims, **characterised in that** it comprises means for locking the pivoting of the seat body (2) in relation to the base (1) in each of said travel positions and two pivoting unlocking controls, suitable for enabling the pivoting of the seat body from said travel position to, respectively, a right arranging position and a left arranging position, the car seat also comprising means for selecting one of said controls, suitable for moving between a first position wherein it is suitable for actuating a first of said controls and prevents the actuation of the second of said controls and a second position wherein it is suitable for actuating the second of said controls and prevents the actuation of the first of said controls.

12. Child car seat according to claim 11, **characterised in that** the movable selection means comprise a selection plate (5) suitable for moving between a first position wherein it comes into contact with and/or covers at least partially the second of said controls to prevent the actuation thereof and is at a distance from the first of said controls, and a second position wherein it comes into contact with and/or covers at least partially the first of said controls and is at a distance from the second of said controls.

13. Child car seat according to claim 12, **characterised in that** said selection plate (5) is suitable for moving by sliding between said first and second positions.

14. Child car seat according to claim 12, **characterised in that** said selection plate (5) comprises a gripping zone (51) allowing the user to move same between said first and second positions.

15. Child car seat according to any of the above claims, **characterised in that** controls for unlocking the pivoting of the position and said movable selection means are placed on the front of an element of the car seat pivotably connected to the seat body (2).

16. Child car seat according to any of the above claims, **characterised in that** said controls for unlocking the pivoting of the position act, when actuated, as handles (32, 33) for rotating the seat body (2) by the user.

17. Child car seat according to any of the above claims, **characterised in that** each of said controls is actuated by pressing on one face of said control, said movable selection means preventing access to said face, in any of the positions, to prevent the actuation of said control.
